# EUROPEAN PATENT SPECIFICATION

(11) **EP 1 530 341 B1**
(45) Date of publication and mention of the grant of the patent: **23.05.2007**
(21) Application number: 04020679.9
(22) Date of filing: 31.08.2004
(51) Int. Cl.: H04L 29/06

(54) **Load balancing system**
Lastausgleichssystem
Système d'équilibrage de charge

(30) Priority: 06.11.2003 JP 2003376383
(43) Date of publication of application: 11.05.2005
(73) Proprietor: Hitachi, Ltd., Chiyoda-ku, Tokyo 101-8010 (JP)
(72) Inventor: Nakahara, Masahiko, Hitachi, Ltd., Chiyoda-ku, Tokyo 100-8220 (JP); Nagami, Akihisa, Hitachi, Ltd., Chiyoda-ku, Tokyo 100-8220 (JP); Noda, Fumio, Hitachi, Ltd., Chiyoda-ku, Tokyo 100-8220 (JP)
(74) Representative: Strehl Schübel-Hopf & Partner

(56) References cited:
- WO-A-01/13228
- WO-A-02/082727
- WO-A-03/017055
- US-A1- 2002 042 823

## Description

### BACKGROUND OF THE INVENTION

The present invention relates to a load balancing system for distributing an access to a plurality of servers and more particular, to a method for running a load balancer.

As the Internet spreads, conventional services including ticket sale so far done at a ticket window have been realized in the Internet. As communication techniques advances, in addition, there has been arranged such an environment that the same services can be accepted not only from homes or offices but also from portable phones.

A service provider server (which will be referred to as the service server, hereinafter) for providing such services as mentioned above via the Internet is usually required to process requests from a multiplicity of client terminals, and thus such many requests cannot be processed by such a single service server. For this reason, there is known a system which includes a plurality of service servers connected to a load balancer, and wherein requests from a multiplicity of client terminals are distributed to a plurality of service servers to resolve an overflow problem, as disclosed, e.g., in Japanese Laid Open Patent Publication No. 2003-178041 (paragraph No. 0020).

With regard to a problem that the service servers are put in an overload state and thus a response performance to the client terminal is deteriorated, in the prior load balancing system disclosed in the Japanese Laid Open Patent Publication No. 2003-178041 (paragraph No. 0020), the problem is solved by monitoring the CPU use amounts, memory use amounts, etc. of the service servers, reducing the amount of requests distributed to the service server having a higher load, removing the source as the cause of the performance deterioration (e.g., freeing up the memory being excessively used), and so on.

US 2002/0042823 A1 discloses a load balancing system for managing a plurality of web servers, which can manage web traffic by directing web page requests to available web servers and balance the web page request service load among the multiple servers. The system can further collect and report data on web page requests and web server responses to those requests.

WO 02/082727 A1 discloses a method for collecting information about the performance of a network as well as a system and method for analyzing the gathered information. The system comprises an analysis server, which provides schedule information to client systems which run manager and agent programs for testing remote web server systems. The gathered information is provided to the analysis server which produces log files, performs an analysis thereof and stores the results in a database.

The usual load balancing system disclosed in the Japanese Laid Open Patent Publication No. 2003-178041 is designed to be based on removing the cause when an overload takes place and it tends to deteriorate the system performance. For this reason, as time elapses, the system performance can be recovered but the system performance is temporarily reduced.

### Summary of the invention

It is an object of the present invention to provide an effective load balancing system which offers high flexibility in sharing unused resources and is easy to administrate. The object is met by the invention as laid out in the characterising portion of claim 1. The subclaims relate to preferred embodiments of the invention. }

It is well known that access to a service server via the Internet has a statistical pattern according to service in one day, one week or one month. For example, it is known that an in-company business service has such a statistical access pattern that an access load to the service server becomes high after 9 o'clock in the morning at which business starts and after 1 o'clock in the afternoon which a lunch break ends on weekdays.

In a load balancing system for distributing requests to a plurality of service servers in accordance with the present invention, information obtained by statistically processing an access log is used for load balancing control over the service servers to beforehand prevent the reduction of a service performance caused by the overload requests to the service servers.

In an aspect of a load balancing system in accordance with the present invention, the system includes a load balancer and an administration server, and the administration server statistically processes an access log. On the basis of the number of requests per unit time obtained from the statistical processing, the administration server predicts the number of service servers necessary for each time slot and informs the predicted number to the load balancer. The load balancer sets, according to the informed information about the time slot and the number of service servers, sets the distribution to a necessary number of service servers immediately before the specified time slot. As a result, the overload of requests to the service servers can be avoided and the reduction of the service performance can be beforehand prevented.

Further, when a special assignment day (which will be referred to as the access special day, hereinafter), on which an access pattern different from a usual pattern is already found or predicted, is specified, statistical processing different from the usual pattern is carried out on the special day and distribution setting unique to the special day is carried out, thus enabling suitable access control.

In accordance with the present invention, improved load balancing control can be realized and a high quality of service can be provided.

These and other benefits are described throughout the present specification. A further understanding of the nature and advantages of the invention may be realized by reference to the remaining portions of the specification and the attached drawings.

### BRIEF DESCIPTION OF THE DRAWINGS

FIG. 1 is a configuration of a communication network system including a load balancing system 3 in accordance with an embodiment of the present invention;
FIG. 2 is an arrangement of a load balancer 4 and an administration server 5 in the load balancing system 3;
FIG. 3 shows an example of a data structure of an access log file 60 accumulated on a disk 44 of the load balancer 4 and on a disk 54 of the administration server 5;
FIG. 4 shows an example of a data structure of each of access log records 62-1 to 62-K in an actual access log;
FIG. 5 is a flowchart showing an example of request distributing operations carried out by the load balancer 4;
FIG. 6 shows an example of a table for the load balancer 4 to control request distribution destination;
FIG. 7 shows an example of a record table for recording statistics of access to a service server 7 on a usual day;
FIG. 8 shows an example of the record table for recording statistics of access to the service server on an access special day;
FIG. 9 is a flowchart showing an example of an access log statistical operation carried out by the administration server 5;
FIG. 10 is an example of a table showing a run schedule for service servers 7-1 to 7-N; and
FIG. 11 is a flowchart showing another example of the request distributing operation carried out by the load balancer 4.

### DETAILED DESCRIPTION OF THE EMBODIMENTS

Explanation will be made in connection with an embodiment of the present invention, with reference to the accompanying drawings.

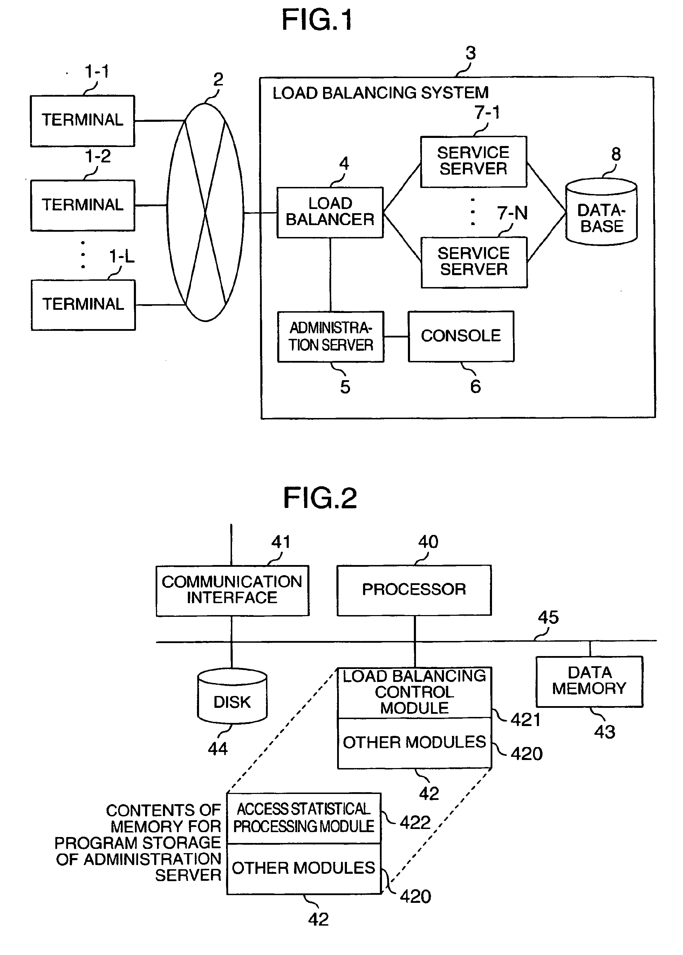

FIG. 1 shows a configuration of a communication network system including a load balancing system 3 according to the present embodiment.

The load balancing system 3 is connected to a plurality of client terminals (which will be referred to as the terminals, hereinafter) 1 (1-1 to 1-L) via a communication network 2 such as LAN or Internet.

The load balancing system 3 includes a load balancer 4 connected to the communication network 2, an administration server 5 having a communication function with the load balancer 4, a console 6 connected to the administration server, service servers 7 (7-1 to 7-N) connected to the load balancer 4, and a database 8 connected to the service servers 7. In this connection, the administration server 5 can communicate with the service servers 7 via the load balancer 4.

In the example of FIG. 1, the load balancer 4 is provided to be separated from the administration server 5. However, the function of the load balancer 4 and the function of the administration server 5 may be combined to form a single apparatus.

Although the service server is provided as a single apparatus in the example of FIG. 1, the service server may be made up of a plurality of servers which are, e.g., a combination of a Web server for exclusive processing of communication with the terminals 1 and a database server for exclusive database processing.

A request transmitted from any of the terminals 1 is received by the load balancer 4 via the communication network 2. The load balancer 4 distributes the received request to the service servers 7 according to a predetermined load balancing algorithm. The service server 7, in response to the request from the terminal 1, performs processing on the database 8 as necessary, creates response data, and transmits the data to the load balancer 4. The load balancer 4 transmits the received response data to the terminal 1 as a request originator. Simultaneously, the load balancer 4 creates an access log relating to transmission and reception of the request.

FIG. 2 shows an arrangement of the load balancer 4 and administration server 5.

The load balancer 4 has a processor 40; a communication interface 41 for interconnection of the communication network 2, administration server 5 and service server 7; a memory 42 for program storage, a memory 43 for data storage, and a disk 44 for temporarily storing an access log. These constituent elements are mutually connected by means of an internal communication line 45 (which will be referred to merely as the bus, hereinafter) such as a bus. A load balancing control module 421 for distributing the received request to the service server 7 as well as other control modules 420 are stored as control software to be executed by the processor 40 in the memory 42.

The administration server 5 has basically the same structure as the load balancer 4, but is different in that an access statistical processing module 422 for acquiring the access log from the load balancer 4, statistically processing the log, and deciding the number of necessary service servers on the basis of the statistically-processed result as well as other control modules 420 are stored in the memory 42 for program storage.

Further, each of the above control module and processing module may be stored previously in the disk 44 of the load balancer, or may be introduced into the load balancer as necessary via a storage medium usable by the balancer and mountable thereon or via a communication medium (e.g., via communication line or a carrier on the communication line).

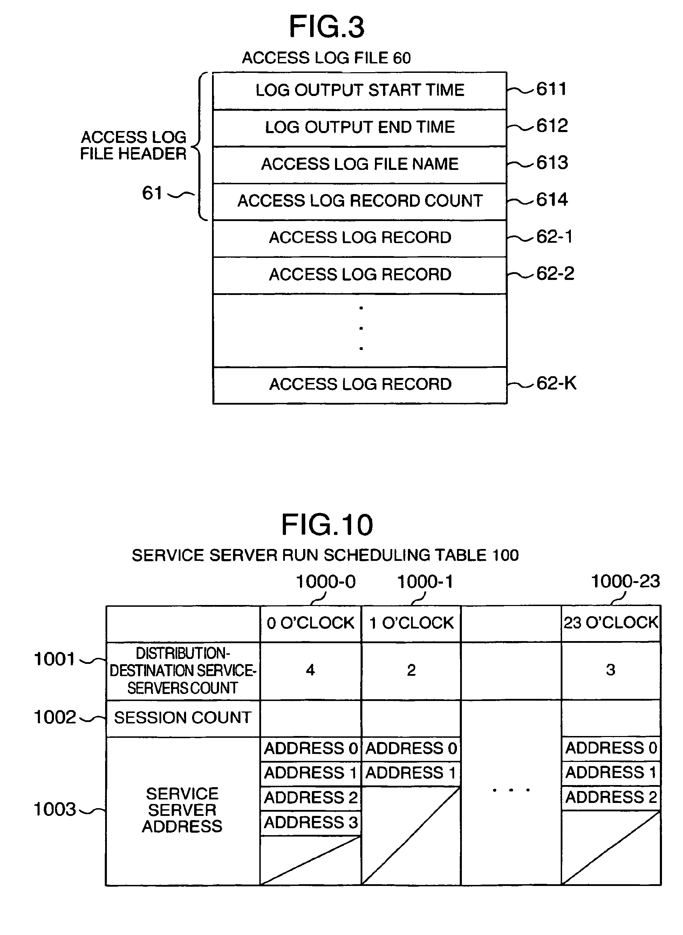

FIG. 3 shows a data structure of a file for storing the access log created by the load balancer 4.

An access log file 60 for storing the access log has an access log file header 61 for storing information about the access log file 60, and access log records 62-k (1 ≤ k ≤ K) as the entity of the access log issued from the load balancer 4.

The access log file header 61 includes a log output start time 611 indicative of a date on which an access log was first written in the file, a log output end time 612 indicative of a data on which an access log was last written in the file, an access log file name 613 indicative of a changed destination to which a proxy server changed its output destination to another file, and an access log record count 614 indicative of the number of access logs stored in the file.

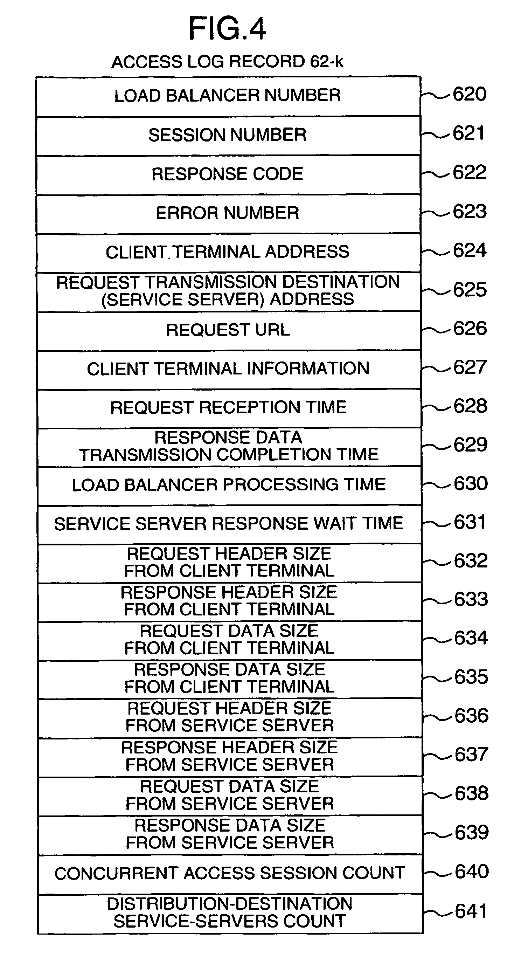

FIG. 4 is an exemplary structure of an access log, showing, in a data format, one of the access log records 62-k created in units of request transmission/reception (called "session").

The session to be used in the present embodiment refers to one transaction after an access originator (the terminal 1 in the present embodiment) issues a request until an access destination (the service server 7 in the present embodiment) responds to the request.

The access log record 62-k has a load balancer number 620 indicative of the load balancer 4 which outputted the record, a session number 621 indicative of the acceptance number of the request which the load balancer 4 received, a response code 622 indicative of an error state which is attached to response data issued from the service server, an error number 623 indicative of an error code with which the load balancer 4 responds to the terminal 1, a terminal address 624 for identifying the transmission originator of the received request, a request transfer destination (service server) address 625 indicative of the transmission destination of the request, a request URL 626 indicative of the request transmission destination written in the request, terminal information 627 indicative of information about the terminal 1 which transmitted the request, a request reception time 628 indicative of a time at which the load balancer 4 received the request from the terminal 1, a response message transmission completion time 629 indicative of a time at which the load balancer 4 finished transmitting the response data to the terminal 1, a load balancer processing time 630 indicative of a time taken for the load balancer 4 to process, a service server response wait time 631 indicative of a wait time after transmission of the request to the service server 7 until reception of response data from the service server 7, a header size 632 of the request received from the terminal 1, a header size 633 of the response data to the terminal 1, a data size 634 of the request received from the terminal 1, a data size 635 of response data to the terminal 1, a header size 636 of the request transmitted to the service server 7, a header size 637 of the response data received from the service server 7, a data size 638 of the request transmitted to the service server 7, a data size 639 of the response data received from the service server 7, a session count 640 indicative of the number of sessions simultaneously connected to the same service server during session processing, and a distribution-destination service-servers count 641 during processing of the session.

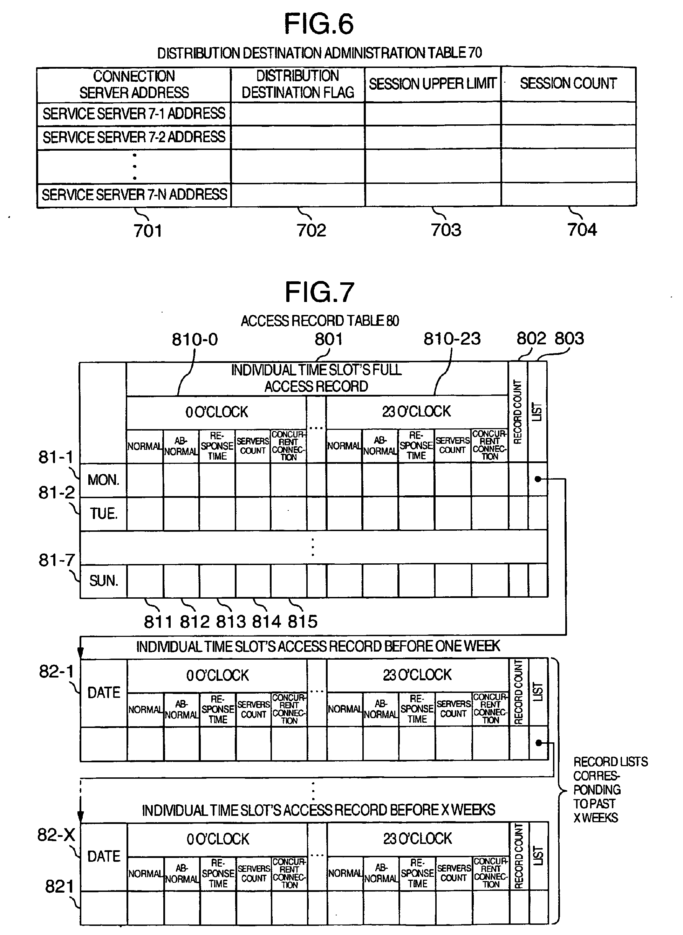

FIG. 6 shows an example of a structure of a table held by the load balancer 4 to control request distribution destinations.

A distribution destination administration table 70 has a connection server address 701 indicative of the address of a service server connected to the load balancer 4 and capable of being used as the request distribution destination, a distribution target flag 702 indicative of whether or not the service server is used currently as the distribution destination, a connection session upper limit 703 indicative of the upper limit value of the number of sessions simultaneously connected to the service server, and a connection session count 704 indicative of the number of sessions currently connected to the service server.

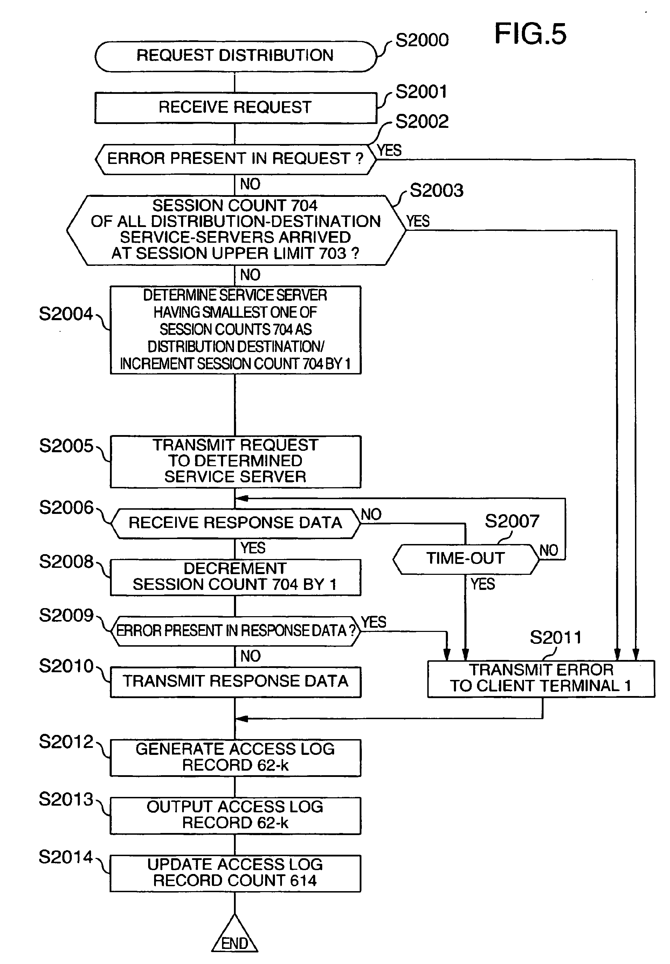

FIG. 5 shows a flowchart for explaining a request distributing function which is realized when the processor 40 of the load balancer 4 executes the load balancing control module 421.

When the load balancer 4 receives a request from the terminal 1 (Step S2001), the balancer checks whether or not there is no error in the request (Step S2002). In the presence of an error, the load balancer transmits the error to the terminal 1 (Step S2011). If the request is correct, then the load balancer compares the connection session upper limit 703 and the connection session count 704 in the distribution destination administration table 70 to check the presence or absence of the service server 7 to which the request can be distributed (Step S2003).

When the connection session count 704 of all the service servers 7 reaches the connection session upper limit 703, it is impossible to transmit the request to the service server. Thus the load balancer transmits the error to the terminal 1 (Step S2010).

When there are service servers 7 to which the request can be transmitted, the load balancer compares the respective connection session counts 704 of the service servers 7, determines one of the service servers 7 having the smallest connection session count as the distribution destination, and increments the value of the smallest connection session count 704 by 1 (Step S2004). When determining the service server 7 to which the request is distributed, the load balancer transmits the request to the corresponding service server 7 (Step S2005), and waits for a response from the service server 7 (Step S2006).

When the load balancer fails to receive a response from the service server 7 times out (Step S2007), the balancer transmits an error to the terminal 1 (Step S2011).

When receiving response data from the service server 7, the load balancer decrements the value of the connection session count 704 by 1 (Step S2008) and checks whether or not there is no error in the response data (Step S2009). In the presence of an error such as a protocol breach in the response data, the load balancer transmits an error to the terminal 1 (Step S2011). When the response data is correct, the load balancer transmits the response data to the terminal 1 (Step S2010).

Even in any of Steps S2010 and S2011, the load balancer 4 generates such an access log record 62-k as shown in FIG. 4 according to the processed result (Step S2012) and outputs it to the access log file 60 within the disk 44 (Step S2013). The load balancer further updates the value of the access log record count 614 in the access log file header 61 (Step S2014).

Explanation will next be made as to the processing of the administration server 5.

FIG. 7 is an example of a structure of a table generated when the processor 40 executes the access statistical processing module 422 in the administration server 5.

An access record table 80 stores statistical data obtained from the access log. The access record table 80 has record tables 81-1 to 81-7 for each day of a week, with respect to an individual time slot's full access record 801 for recording a request processing frequency for each time slot and with respect to a record count 802. The individual time slot's full access record 801 further has items of recording an access count 811 indicative of the number of accesses normally processed for each unit hour, an access count 812 indicative of the number of errors returned for accesses because the request cannot be transmitted to the service server 7, a response time 813 from the service server, an service servers count 814 indicative of the number of service servers as distribution destinations, and a maximum session count 815.

The record tables 81-1 to 81-7 for each day of one week further has individual time slot's access record lists 82-1 to 82-X connected to a list 803 and for individual constant past time periods (corresponding to one day). The constituent elements of the individual time slot's access record lists 82-1 to 82-X are the same as the individual time slot's full access record 801, except that information on a date 821 is added thereto.

In the example of FIG. 7, the record table 81 is divided in units of day in one week. However, the record table 81 may be divided, for example, in units of day (first, second, ... , or thirty-first day) in one month or in the form of the first, middle or last ten days in one month.

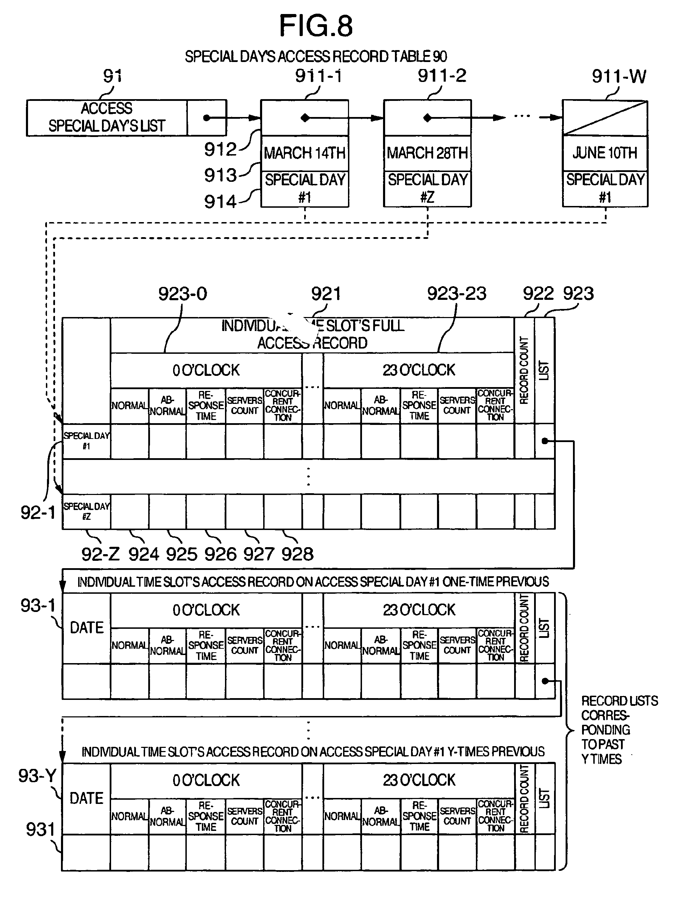

FIG. 8 shows an example of a structure of another table generated when the processor 40 in the administration server 5 executes the access statistical processing module 422.

A special day's access record table 90 is used to collect an access record for an access special day specified by the operator apart from the access record table 80.

The special day's access record table 90 includes an access special day's list 91 holding the access special day specified by the operator and pattern-by-pattern record tables 92-1 to 92-Z collecting an access record for each pattern of the special day. The access special day's list 91 has access special day's blocks 911-1 to 911-W. Each of the access special day's blocks has an index 912 for the next block, an access special day 913, and an access special day's pattern 914 indicative of a group to which access special days having an identical access pattern belong.

Setting of the access special day's block is carried out by the operator who enters data from the console 6 connected to the administration server 5.

The operator enters a date as the access special day and the access special day's pattern from the console 6. The administration server 5 sets the date and access special day's pattern entered from the console 6, in the access special day 913 and access special day's pattern 914 of a newly-prepared access special day's block 911 respectively. The access special day's blocks 911 are connected to the access special day's list 91 so that the blocks are arranged in the ascending order of the access special day 913.

Each of the pattern-by-pattern record tables 92-1 to 92-Z has an individual time slot's full access record 921 and a record count 922. The individual time slot's full access record 921 has record items of an access count 924 indicative of the number of normally processed accesses for each unit hour, an access count 925 indicative of the number of errors returned to the service server 7 because the request cannot be transmitted thereto, a response time 926 from the service server, a service servers count 927 indicative of the number of service servers as distribution destinations, and a maximum access session count 928.

Each of the pattern-by-pattern record tables 92-1 to 92-Z has individual time slot's access record lists 93-1 to 93-Y connected to a list 923 and for a given period (corresponding to one day).

As shown in FIGS. 7 and 8, since the access record table 80 and the special day's access record table 90 hold a constant amount of individual time slot's access record of past dates, the access record of the specified date can be removed from the statistically-processed result.

For example, the operator specifies a date for the operator to want to delete its access record from the console 6.

When the processor 40 executes the access statistical processing module 422, the administration server 5 first refers to the special day's access record table 90, and checks the presence or absence of an individual time slot's access record list 93 having information about the same date 931 as a date entered from the console 6. When the individual time slot's access record list 93 having the same date is present, the individual time slot's access record list 93 is removed from the list 923, the value recorded in the individual time slot's access record list 93 is subtracted from the individual time slot's full access record 921 within a pattern-by-pattern record table 92. Thereafter, the individual time slot's access record list 93 is initialized and connected to the last part of the list 923.

When data about the date is absent in the special day's access record table 90, the administration server refers to the access record table 80 and checks the presence or absence of the individual time slot's access record list 82 having information about the same date 821 as the date entered from the console 6. When the individual time slot's access record list 82 having the same date is present, the individual time slot's access record list 82 is removed from the list 803, and the value recorded in the individual time slot's access record list 82 is subtracted from the individual time slot's full access record 801. Thereafter, the individual time slot's access record list 82 is initialized and connected to the last part of the list 803.

Through the aforementioned procedure, the access record of the date specified by the operator can be deleted from the statistically-processed result.

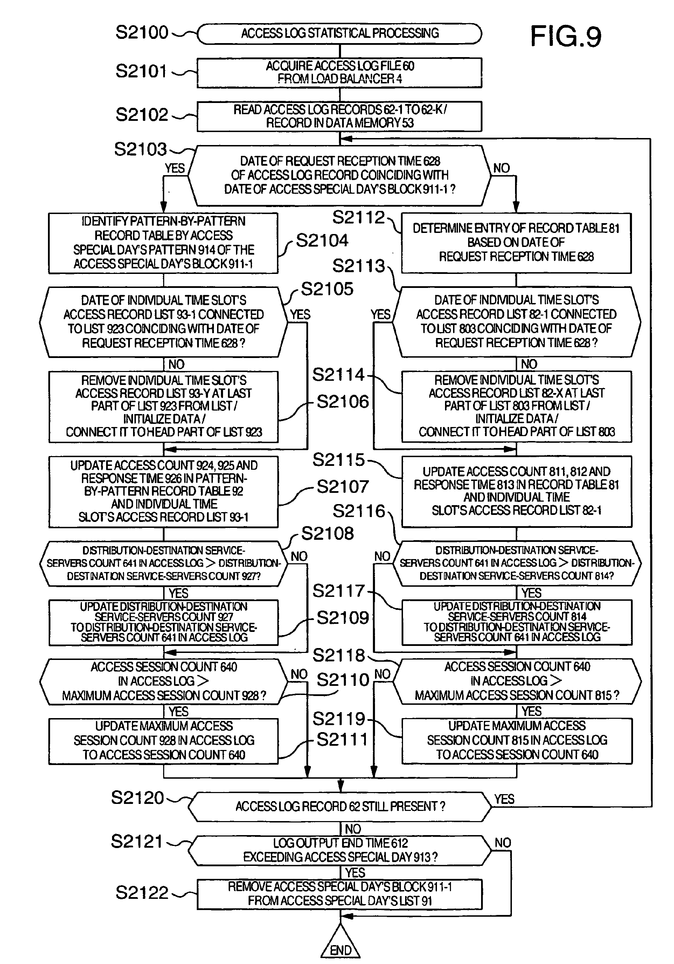

FIG. 9 is a flowchart showing a summary of the statistical processing function realized when the processor 40 of the administration server 5 executes the access statistical processing module 422.

The administration server 5 first acquires the access log file 60 present on the disk 44 of the load balancer 4 (Step S2101). For the file acquisition, file transfer between servers based on FTP protocol or the like may be used, or a disk may be shared by the load balancer 4 and the administration server 5 and the access log file 60 may be stored in the shared disk. After acquiring the access log file 60, the administration server reads access log records 62-1 to 62-K present in the access log file onto a data memory 53 of the administration server 5 (Step S2102). The administration server performs the following operation over access log records 62-1 to 62-K read onto the memory.

When the date of the request reception time 628 of an access log record 62 coincides with the access special day's block 911-1 (Step S2103), the administration server identifies one of entries of the pattern-by-pattern record tables 92-1 to 92-Z by the access special day's pattern 914 of the access special day's block 911-1 (Step S2104).

When the date 931 of the individual time slot's access record list 93-1 connected to the list 923 of the entry fails to coincide with the date of the request reception time 628 of the access log record 62 (Step S2105), next, the administration server removes the individual time slot's access record list 93-Y connected to the last part of the list 923 from the list, initializes the individual time slot's access record list 93-Y (more specifically, sets the date of the access special day 913 of the access special day's block 911-1 in the date 931 and sets '0' in the other data), and then connects the corresponding list 93-Y to the top part of the list 923 (Step S2106). As a result, the list 93-Y initialized and connected to the list top part is replaced with the individual time slot's access record list 93-1.

Next, using the values obtained from the access log record 62, the administration server updates the values of the access count 924, abnormal access count 925, and response time 926 in the time slot within the pattern-by-pattern record table 92 and individual time slot's access record list 93-1 (Step S2107). More specifically, when a value is set in the error number 623 of the access log record 62 (that is, an error took place), the value of the abnormal access count 925 is incremented by 1, and otherwise, the value of the access count 924 is incremented by 1. Further, the value of the service server response wait time 631 is added to the response time 926.

The administration server compares the distribution-destination service-servers count 641 in the access log record 62 with the value of the distribution-destination service-servers count 927 in the corresponding time slot within the pattern-by-pattern record table 92 and individual time slot's access record list 93-1 (Step S2108). When the value 641 in the access log record is larger, the distribution-destination service-servers count 927 in the pattern-by-pattern record table 92 and individual time slot's access record list 93-1 is updated to the value of the access log record (Step S2109).

The administration server further compares an access session count 640 in the access log record 62 with the value of the maximum access session count 928 in the corresponding time slot within the pattern-by-pattern record table 92 and individual time slot's access record list 93-1 (Step S2110). When the value 640 in the access log record is larger, the maximum access session count 928 in the pattern-by-pattern record table 92 and individual time slot's access record list 93-1 is updated to the value of the access log record (Step S2111).

When the date of the request reception time 628 of the access log record 62 fails to coincide with the block 911-1 as the top block of the access special day's list 91 (Step S2103), on the other hand, the administration server identifies the day by the date of the request reception time and identifies an entry of the record tables 81-1 to 81-7 (Step S2112).

When the date 821 of the individual time slot's access record list 82-1 connected to the list 803 of the corresponding entry fails to coincide with the date of the request reception time 628 of the access log record 62 (Step S2113), the administration server removes the individual time slot's access record list 82-X connected to the last part of the list 803 from the list, initializes the individual time slot's access record list 82-X (more specifically, sets the date of the request reception time 628 of the access log record 62 at the date 821 and sets 0 for the other data), and then connects the corresponding list 82-X to the top part of the list 803 (Step S2114). As a result, the list 82-X initialized and connected to the list top part is replaced with the individual time slot's access record list 82-1.

Using the values obtained from the access log record 62, the administration server updates the values of the normal access count 811, abnormal access count 812, and response time 813 in the corresponding time slot within the record table 81 and individual time slot's access record list 82-1 (Step S2115). More specifically, when a value is set for the error number 623 of the access log record 62, that is, when an error took place, the value of the abnormal access count 812 is incremented by 1, and otherwise the value of the normal access count 811 is incremented by 1. The value of the service server response wait time 631 is added to the response time 813.

The administration server compares the distribution-destination service-servers count 641 in the access log record 62 with the value of the distribution-destination service-servers count 814 in the corresponding time slot within the record table 81 and individual time slot's access record list 82-1 (Step S2116). When the value 641 in the access log record is larger, the distribution-destination service-servers count 814 in the record table 81 and individual time slot's access record list 82-1 is updated to the value of the access log record (Step S2117).

The administration server further compares the access session count 640 in the access log record 62 with the value of the maximum session count 815 in the corresponding time slot within the record table 81 and individual time slot's access record list 82-1 (Step S2118). When the value 640 in the access log record is larger, the maximum session count 815 in the record table 81 and individual time slot's access record list 82-1 is updated to the value of the access log record (Step S2119).

The administration server performs the operations of the above Steps S2103 to S2115 over the access log records 62-1 to 62-K (Step S2120).

Last, when the date of the log output end time 612 recorded in the header 61 of the access log file 60 elapses the access special day 913 of the access special day's block 911-1 (Step S2121), the administration server removes the access special day's block 911-1 from the access special day's list 91 (Step S2122).

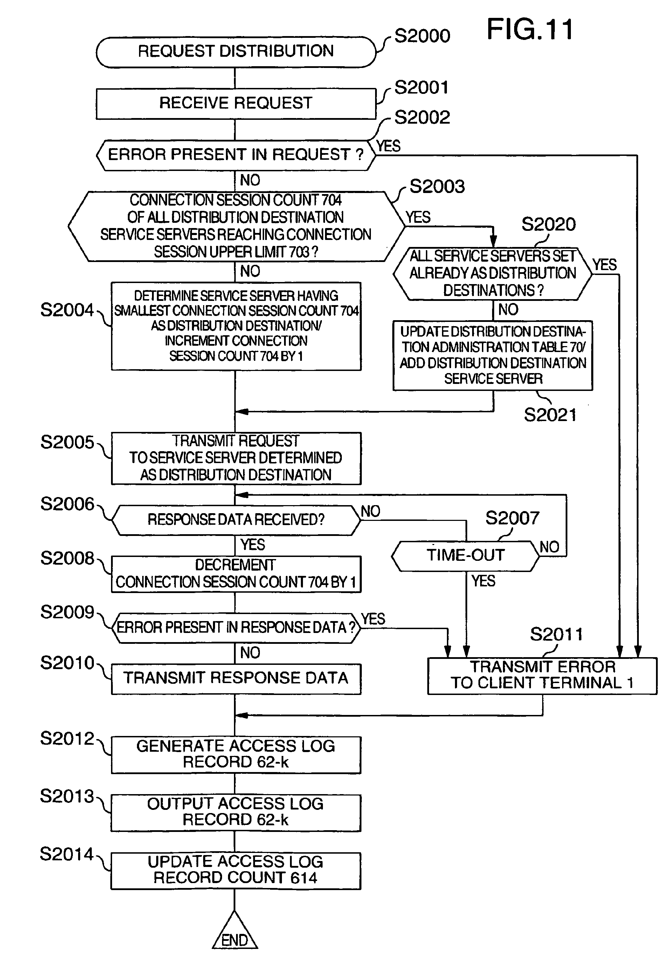

FIG. 10 shows an exemplary structure of a service server run scheduling table generated when the processor 40 of the administration server 5 executes the access statistical processing module 422.

A service server run scheduling table 100 has individual time slot's run lists 1000-0 to 1000-23. Each of the individual time slot's run lists has a distribution-destination service-servers count field 1001 for storing the number of service servers as distribution destinations, a session count field 1002 for setting the upper limit of a total number of sessions to be connected, and a service server address field 1003 for storing the addresses of service servers as actual distribution destinations.

The service server run scheduling table 100 was created by the administration server 5 previously, for example on the preceding day.

The administration server 5 first refers to the access special day's list 91 and checks whether or not the next day is an access special day. When the next day is the access special day, the administration server determines the record table 92-n to be referred to on the basis of the access special day's pattern 914 of the access special day's block 911. When the next day is not the access special day, the administration server determines the record table 81 to be referred to on the basis of the day in question within the access record table 80.

After determining the record table to be referred to, the administration server finds the number of necessary servers in each time slot.

For example, on the access special day, the administration server 5 computes an average throughput by dividing a sum of the normal access count 924 and the abnormal access count 925 in each time slot recorded in the individual time slot's full access record 921 of the special day's access record table 90 by a record count and unit time, and sets the computed value for the session count 1002.

In a manner similar to the above, the administration server computes an average response time for each time slot. When the computed average response time is larger than a reference maximum response time previously determined by the system, the administration server checks the distribution-destination service-servers count 927 in the corresponding time slot. If it is possible to increase the number of such distribution-destination service-servers, then sets the value of the distribution-destination service-servers count 927 incremented by 1 for the distribution-destination service-servers count 1001 as a distribution-destination service servers count.

If it is impossible to increase the number of distribution-destination service servers, then the administration server sets the value of the distribution-destination service-servers count 927 for the distribution-destination service-servers count 1001 as it is without any change. Simultaneously, the administration server compares the value set for the session count 1002 with the value of the maximum access session count 928, selects smaller one of the values, and replaces the value of the session count 1002 with a value obtained by subtracting a constant value (e.g., 10, 100, or so which is previously set according to the scales of the system) from the selected value.

On the contrary, when the average response time is smaller than the reference maximum response time by a constant time (e.g., 1/2 or so of the reference maximum response time or the like which is previously determined) or more, the administration server sets a value obtained by subtracting 1 from the value of the distribution-destination service-servers count 927 for the distribution-destination service-servers count 1001 as a distribution-destination service-servers count.

Even when the value of the access record table 80 is used, the administration server determines the number of distribution-destination service-servers through operations similar to the above.

On a day other than the access special day, the administration server computes an average throughput by dividing a sum of the normal access count 811 and the abnormal access count 812 in each time slot recorded in the record table 81 on the corresponding day in the individual time slot's full access record 801 of the access record table 80 by record count and unit time, and sets the computed value for the session count 1002.

In a similar manner to the above, the administration server computes an average response time for each time slot. If the computed average response time is larger than the reference maximum response time previously determined by the system, the administration server checks the distribution-destination service-servers count 814 for the corresponding time slot. If it is possible to increase the number of distribution-destination service-servers, then the administration server sets the value of the distribution-destination service-servers count 814 incremented by 1 for the service-servers count 1001 as a distribution-destination service-servers count.

If it is impossible to increase the number of distribution-destination service-servers, then the administration server sets the value of the distribution-destination service-servers count 814 for the distribution-destination service-servers count 1001 as it is without any change. Simultaneously, the administration server compares the value set for the session count 1002 with the value of the maximum session count 815, selects smaller one of the values, and replaces the value of the session count 1002 with a value obtained by subtracting a constant value (which is the same value as in the aforementioned access special day) from the selected value.

On the contrary, when the average response time is smaller than the reference maximum response time by a constant value (which is the same as in the aforementioned access special day) or more, the administration server sets a value obtained by subtracting 1 from the value of the distribution-destination service-servers count 814, for the service-servers count 1001 as a distribution-destination service-servers count.

In the above embodiment, each record of the access record table 80 on a day other than the access special day is prepared in units of a day in one week. However, the present invention is not limited to the above example, but the record may be prepared based on another reference.

As mentioned above, after determining the number of distribution-destination service-servers for each time slot, the administration server 5 allocates the service servers 7-1 to 7-N according to the value set in the field 1001 of distribution-destination service-servers count, and sets the addresses of the service servers for the service server addresses 1003. The method for allocating the service servers includes allocation of a necessary number of service servers always in an increasing order of their addresses, and a rotation system wherein the address of the last-allocated service server is always held and service servers are sequentially allocated with use of the held address as a reference.

After creating the service server run scheduling table 100 by the aforementioned method, the administration server 5 transmits the service server run scheduling table 100 to the load balancer 4.

The processor 40 in the load balancer 4, when executing the created load balancing control module 421, the processor stores the received service server run scheduling table 100 in the data memory 43, refers to the service server run scheduling table 100, e.g., at 59 minutes each hour, and updates the distribution destination administration table 70 according to the designated contents. More in detail, with respect to the service server designated in the service server address 1003 of the service server run scheduling table 100, the processor sets the distribution target flag 702 in the distribution destination administration table 70. The processor further sets, a value obtained by dividing the value of the session count 1002 in the service server run scheduling table 100 by the distribution-destination service-servers count 1001, for the connection session upper limit 703 of the service server having the distribution target flag 702 set therein.

Thereafter, the processor 40 in the load balancer 4 executes the load balancing control module 421 to allocate the request according to the contents of the distribution destination administration table 70.

In accordance with the above embodiment, the running schedule of the load balancing system is automatically determined from past statistical data and load balancing control is carried out to avoid the overload of the service server. As a result, service quality can be prevented from being reduced by the overload of the service server.

Even for a special day having a pattern different from the usual access pattern, a running schedule for the special day can be automatically determined when the operator previously enters the special day, thus enabling more suitable load balancing control.

The administration server 5 can execute an application different from the service provided via the load balancer 4 over the service server not allocated as the distribution destination on the basis of the service server run scheduling table 100. Since the service servers necessary for the service to be done via the load balancer 4 are allocated on the basis of the service server run scheduling table 100, the system can execute its transaction without exerting influence upon the service and can be efficiently used.

In the case of no transaction, the service server not allocated as the distribution destination can also be stopped. For example, at 5 minutes each hour, the administration server checks the service server address 1003 in the corresponding time slot written in the service server run scheduling table 100. And if there is a service server not allocated as the distribution destination, then the administration server communicates with the corresponding service server 7 to stop the server 7. Since the unnecessary service server can be stopped, the power consumption of the entire system can be suppressed.

With respect to the stopped service server, the administration server checks the service server address 1003 written in the service server run scheduling table 100, and if necessary, the server can start the server.

In the above embodiment, when requests exceeding an expected count in the service server run schedule prepared by the administration server 5 arrives at the load balancer 4, the load balancer 4 returns an error to the terminal 1, as shown in Steps S2003 and S2011 of FIG. 5, thereby maintaining the service quality in the prepared service server range.

When requests exceeding the expected count in the service server run schedule arrived at the load balancer 4, on the other hand, the load balancer 4 may add a distribution-destination service-server and the request may also be distributed to the added service server, thereby maintaining the service quality.

FIG. 11 shows a flowchart for explaining a request distributing function realized when the processor 40 of the load balancer 4 executes the load balancing control module 421 in the embodiment.

The request distributing operation in the embodiment of FIG. 11 is similar to that shown in FIG. 5, except that the connection session count 704 of all the service servers 7 reaches the connection session upper limit 703 in Step S2003.

In Step S2003 of FIG. 11, when the connection session count 704 of all the distribution-destination service-servers 7 reaches the connection session upper limit 703, the load balancer 4 refers to the distribution destination administration table 70 and checks whether or not the presence or absence of a service server having the distribution target flag 702 not set therefor (Step S2020). In the presence of a service server having the distribution target flag 702 not set therefor, the service continuation can be realized by distributing the request to the service server.

For the purpose of setting the service server as one of the distribution destinations, the load balancer 4 updates the distribution destination administration table 70 (Step S2021). More specifically, the load balancer 4 sets the distribution target flag 702 for the service server, sets the value of the connection session upper limit 703 of the service server already set as the distribution destination for the connection session upper limit 703 of the service server in question, and further sets the value of the connection session count 704 of the service server in question to 1.

Thereafter, the load balancer 4 transmits the request to the added service server.

After the above operations, the service server in question becomes a distribution-destination service-server.

In accordance with the present embodiment, even when requests exceeding the expected count arrive at the load balancing system 3, the service can be continued without returning an error to the terminal 1.

In the check of Step S2020 in FIG. 11, when all the distribution target flags 702 are set, all the service servers are already set as the distribution destination and thus the request cannot be processed, thus returning an error to the terminal 1.

Information about the addition of the distribution-destination service-server done in Step S2021 by the load balancer 4 is reflected on the distribution-destination service-server 641 of the access log record 62-K. Information about the service servers count reflected on the distribution-destination service-servers count 641 is reflected on the access record table 80 or on the special day's access record table 90 through the statistical processing of the administration server 5 and more specifically, through Step S2109 or S2117 of FIG. 9. Thus, the information is effectively used in preparation of the next service server run scheduling table 100.

The specification and drawings are, accordingly, to be regarded in an illustrative rather than a restrictive sense. It will, however, be evident that various modifications and changes may be made thereto without departing from the scope of the invention as set forth in the claims.

## Claims

1. A load balancing system (3) for distributing a request received from a client terminal (1-1 to 1-L) to any of a plurality of service servers (7-1 to 7-N) and transmitting a response from the service server to the client terminal, the system comprising:
a load balancer (4) having a function of distributing the request from the client terminal to the plurality of service servers; and
an administration module (5) for monitoring an operational state of the load balancer,
wherein:
the load balancer (4) has a function of outputting an access log relating to processing of the request,
the administration module (5) has a function of reading the output access log and performing statistical operation thereover,
**characterised in that** the administration module (5) has
a function of predicting, for each time slot, the number of service servers (7-1 to 7-N) necessary for processing the request on the basis of a result of the statistical operation relating to the processing of the request and preparing a run schedule of the service servers including the predicted numbers of service servers, and
a function of instructing the load balancer (4) to distribute the request to one of the number of service servers given in the run schedule for the respective time slot.

2. The load balancing system (3) according to claim 1, wherein the load balancer (4) has a function of previously determining a method of distributing the request to the service servers (7-1 to 7-N) on the basis of the instructed run schedule.

3. The load balancing system (3) according to claim 1, wherein the administration module (5) has a function of accepting an input of a specific assignment day and a function of performing statistical operation unique to the accepted assignment day for the assignment day.

4. The load balancing system (3) according to claim 3, wherein the administration module (5) has, for the assignment day, a function of preparing the run schedule for the assignment day including a request distribution method unique to the assignment day on the basis of a result of the statistical operation unique to the assignment day, and a function of instructing the load balancer to distribute the request to the service servers (7-1 to 7-N) according to the run schedule for the assignment day.

5. The load balancing system (3) according to claim 4, wherein the load balancer (4) has a function of previously determining a method of distributing the request to the service servers (7-1 to 7-N) for the assignment day on the basis of the instructed run schedule for the assignment day.

6. The load balancing system (3) according to claim 3, wherein the load balancer (4) has a function of deleting the statistical operation of the assignment day from the result of the statistical operation.

7. The load balancing system (3) according to claim 2, wherein, when a number of requests received from the client terminals (1-1 to 1-L) exceeds a number of requests which can be processed by the service servers corresponding to a predicted number in the run schedule, the load balancer (4) has a function of rejecting the requests from the client terminals.

8. The load balancing system (3) according to claim 2, wherein, when a number of requests received from the client terminals (1-1 to 1-L) exceeds a number of requests which can be processed by the service servers corresponding to a predicted number in the run schedule, the load balancer (4) has a function of changing the instructed run schedule, adding a new service server as a request distribution destination, and continuing processing of the requests from the client terminals according to a changed run schedule.

## Patentansprüche

1. Lastausgleichssystem (3) zum Zuteilen einer von einem Client-Terminal (1-1 bis 1-L) empfangenen Anfrage an einen von mehreren Dienstleistungsservern (7-1 bis 7-N) und zum Übertragen einer Antwort von dem Dienstleistungsserver zu dem Client-Terminal, wobei das System aufweist:
eine Lastausgleichseinrichtung (4) zum Zuteilen der von dem Client-Terminal empfangenen Anfrage an die mehreren Dienstleistungsserver; und
ein Verwaltungsmodul (5) zum Überwachen eines Betriebszustands der Lastausgleichseinrichtung,
wobei:
die Lastausgleichseinrichtung (4) dazu ausgelegt ist, ein Zugriffsprotokoll bezüglich der Verarbeitung der Anfrage auszugeben,
das Verwaltungsmodul (5) dazu ausgelegt ist, das ausgegebene Zugriffsprotokoll zu lesen und eine statistische Operation dazu durchzuführen,
**dadurch gekennzeichnet, dass** das Verwaltungsmodul (5) dazu ausgelegt ist,
für jeden Zeitabschnitt die Anzahl von Dienstleistungsservern (7-1 bis 7-N) auf Grundlage eines Ergebnisses der statistischen Operation bezüglich der Verarbeitung der Anfrage vorauszubestimmen, die zur Verarbeitung der Anfrage notwendig sind, und einen Ablaufplan der Dienstleistungsserver einschließlich der vorausbestimmten Anzahl von Dienstleistungsservern zu erstellen, und
die Lastausgleichseinrichtung (4) anzuweisen, die Anfrage einem der mehreren Dienstleistungserver zuzuteilen, die in dem Ablaufplan für den zugehörigen Zeitabschnitt vorgegeben sind.

2. Lastausgleichssystem (3) nach Anspruch 1, wobei die Lastausgleichseinrichtung (4) dazu ausgelegt ist, zuvor ein Verfahren zum Zuteilen der Anfrage an die Dienstleistungsserver (7-1 bis 7-N) auf Grundlage des angewiesenen Ablaufplans zu bestimmen.

3. Lastausgleichssystem (3) nach Anspruch 1, wobei das Verwaltungsmodul (5) dazu ausgelegt ist, eine Eingabe eines bestimmten Auftragstags zu empfangen und eine für den empfangenen Auftragstag einzigartige statistische Operation für den Auftragstag durchzuführen.

4. Lastausgleichssystem (3) nach Anspruch 3, wobei das Verwaltungsmodul (5) für den Auftragstag dazu ausgelegt ist, den Ablaufplan für den Auftragstag einschließlich eines für den Auftragstag einzigartigen Zuteilungsverfahrens auf Grundlage eines Ergebnisses der für den Auftragstag einzigartigen statischen Operation durchzuführen, und die Lastausgleichseinrichtung dazu anzuweisen, die Anfrage an die Dienstleistungsserver (7-1 bis 7-N) gemäß dem Ablaufplan für den Auftragstag zuzuteilen.

5. Lastausgleichssystem (3) nach Anspruch 4, wobei die Lastausgleichseinrichtung (4) dazu ausgelegt ist, zuvor ein Verfahren zum Zuteilen der Anfrage an die Dienstleistungsserver (7-1 bis 7-N) für den Auftragstag auf Grundlage des angewiesenen Ablaufplans für den Auftragstag zu bestimmen.

6. Lastausgleichssystem (3) nach Anspruch 3, wobei die Lastausgleichseinrichtung (4) dazu ausgelegt ist, die statistische Operation des Auftragstags aus dem Ergebnis der statistischen Operation zu löschen.

7. Lastausgleichssystem (3) nach Anspruch 2, wobei bei Empfang einer Anzahl von Anfragen von den Client-Terminals (1-1 bis 1-L), die eine Anzahl von Anfragen übersteigt, die durch die in dem Ablaufplan vorbestimmte Anzahl von Dienstleistungsservern verarbeitet werden kann, die Lastausgleichseinrichtung (4) dazu ausgelegt ist, die Anfragen von den Client-Terminals zurückzuweisen.

8. Lastausgleichssystem (3) nach Anspruch 2, wobei bei Empfang einer Anzahl von Anfragen von den Client-Terminals (1-1 bis 1-L), die eine Anzahl von Anfragen übersteigt, die durch die in dem Ablaufplan vorbestimmte Anzahl von Dienstleistungsservern verarbeitet werden kann, die Lastausgleichseinrichtung (4) dazu ausgelegt ist, den angewiesenen Ablaufplan zu ändern, einen neuen Dienstleistungsserver als ein Anfragezuteilungsziel hinzuzufügen und die Verarbeitung der Anfragen von den Client-Terminals gemäß einem geänderten Ablaufplan fortzuführen.

## Revendications

1. Système d'équilibrage de charge (3) pour distribuer une demande reçue en provenance d'un terminal client (1-1 à 1-L) à un serveur quelconque parmi une pluralité de serveurs de service (7-1 à 7-N) et transmettre une réponse depuis le serveur de service au terminal client, le système comportant:
un dispositif d'équilibrage de charge (4) ayant une fonction de distribution de la demande du terminal client à la pluralité de serveurs de service, et
un module d'administration (5) pour surveiller un état opérationnel du dispositif d'équilibrage de charge,
dans lequel:
le dispositif d'équilibrage de charge (4) a une fonction consistant à délivrer en sortie un journal d'accès concernant le traitement de la demande,
le module d'administration (5) a une fonction consistant à lire le journal d'accès délivré en sortie et à exécuter une opération statistique sur celui-ci,
**caractérisé en ce que** le module d'administration (5) a une fonction consistant à prévoir, pour chaque créneau temporel, le nombre de serveurs de service (7-1 à 7-N) nécessaires pour traiter la demande sur la base d'un résultat de l'opération statistique concernant le traitement de la demande et préparer un programme d'exécution des serveurs de service incluant les nombres prévus de serveurs de service, et
une fonction consistant à ordonner au dispositif d'équilibrage de charge (4) de distribuer la demande à un serveur parmi le nombre de serveurs de service donnés dans le programme d'exécution pour le créneau temporel respectif.

2. Système d'équilibrage de charge (3) selon la revendication 1, dans lequel le dispositif d'équilibrage de charge (4) a une fonction consistant à déterminer au préalable un procédé de distribution de la demande aux serveurs de service (7-1 à 7-N) sur la base du programme d'exécution ordonné.

3. Système d'équilibrage de charge (3) selon la revendication 1, dans lequel le module d'administration (5) a une fonction consistant à accepter une entrée d'un jour d'attribution spécifique et une fonction consistant à exécuter une opération statistique unique au jour d'attribution accepté pour le jour d'attribution.

4. Système d'équilibrage de charge (3) selon la revendication 3, dans lequel le module d'administration (5) a, pour le jour d'attribution, une fonction consistant à préparer le programme d'exécution pour le jour d'attribution incluant un procédé de distribution de demande unique au jour d'attribution sur la base du résultat de l'opération statistique unique au jour d'attribution, et une fonction consistant à ordonner au dispositif d'équilibrage de charge de distribuer la demande aux serveurs de service (7-1 à 7-N) conformément au programme d'exécution pour le jour d'attribution.

5. Système d'équilibrage de charge (3) selon la revendication 4, dans lequel le dispositif d'équilibrage de charge (4) a une fonction consistant à déterminer au préalable un procédé de distribution de la demande aux serveurs de service (7-1 à 7-N) pour le jour d'attribution sur la base du programme d'exécution ordonné pour le jour d'attribution.

6. Système d'équilibrage de charge (3) selon la revendication 3, dans lequel le dispositif d'équilibrage de charge (4) a une fonction consistant à supprimer l'opération statistique du jour d'attribution du résultat de l'opération statistique.

7. Système d'équilibrage de charge (3) selon la revendication 2, dans lequel, lorsqu'un nombre de demandes reçues en provenance des terminaux clients (1-1 à 1-L) dépasse un nombre de demandes qui peuvent être traitées par les serveurs de service correspondant à un nombre prévu dans le programme d'exécution, le dispositif d'équilibrage de charge (4) a une fonction consistant à rejeter les demandes provenant des terminaux clients.

8. Système d'équilibrage de charge (3) selon la revendication 2, dans lequel, lorsqu'un nombre de demandes reçues en provenance des terminaux clients (1-1 à 1-L) dépasse un nombre de demandes qui peuvent être traitées par les serveurs de service correspondant à un nombre prévu dans le programme d'exécution, le dispositif d'équilibrage de charge (4) a une fonction consistant à changer le programme d'exécution ordonné, ajouter un nouveau serveur de service en tant que destination de distribution de demande, et poursuivre un traitement des demandes provenant des terminaux clients conformément à un programme d'exécution changé.
